# EUROPEAN PATENT APPLICATION

(11) **EP 1 892 906 A1**
(43) Date of publication of application: **27.02.2008**
(21) Application number: 07114060.2
(22) Date of filing: 09.08.2007
(51) Int. Cl.: H04L 12/58

(54) **Apparatus and method for displaying an instant message in a mobile terminal**

(30) Priority: 22.08.2006 KR 20060079317
(71) Applicant: Samsung Electronics Co., Ltd., Suwon-si, Gyeonggi-Do (KR)
(72) Inventor: Hong, Young-Su, Goomi-dong, Bundang-gu, Seongnam-si, Gyeonggi-do (KR)
(74) Representative: Grünecker, Kinkeldey, Stockmair & Schwanhäusser Anwaltssozietät

(57) **Abstract**

Provided is an apparatus and method for displaying an instant message in a mobile terminal. The apparatus includes an input unit (302) for receiving a character string composing the instant message; a converter (310) for converting the instant message into XML; a message processor (308) for, upon receipt of a character string set with one or more fonts from the input unit (302), controlling and creating the instant message comprising the character string, converting the instant message with one or more fonts into XML by the converter (310), and sending the converted instant message; and a communication unit (306) for sending and receiving the converted instant message.

## Description

The present invention relates generally to an apparatus and method for displaying an instant message in a mobile terminal, and in particular, to an apparatus and method for setting a plurality of fonts to one instant message and displaying the instant message in a mobile terminal.

In recent years, mobile terminals such as mobile communication terminals or Personal Digital Assistants (PDAs) have been widely used. The mobile terminal is growing larger in its scope of use such as recording a still image or a moving picture by an equipped digital camera, viewing a satellite broadcast, editing a document, playing a game, navigation, or sending/receiving an instant message, as well as simple telephony or schedule management.

In the mobile terminal, an instant message service refers to a service of real-time sending/receiving an instant message through the mobile terminal like real-time sending/receiving an instant message to/from the other party logged onto in a personal computer. An example of editing the instant message will be described with reference to the drawings below.

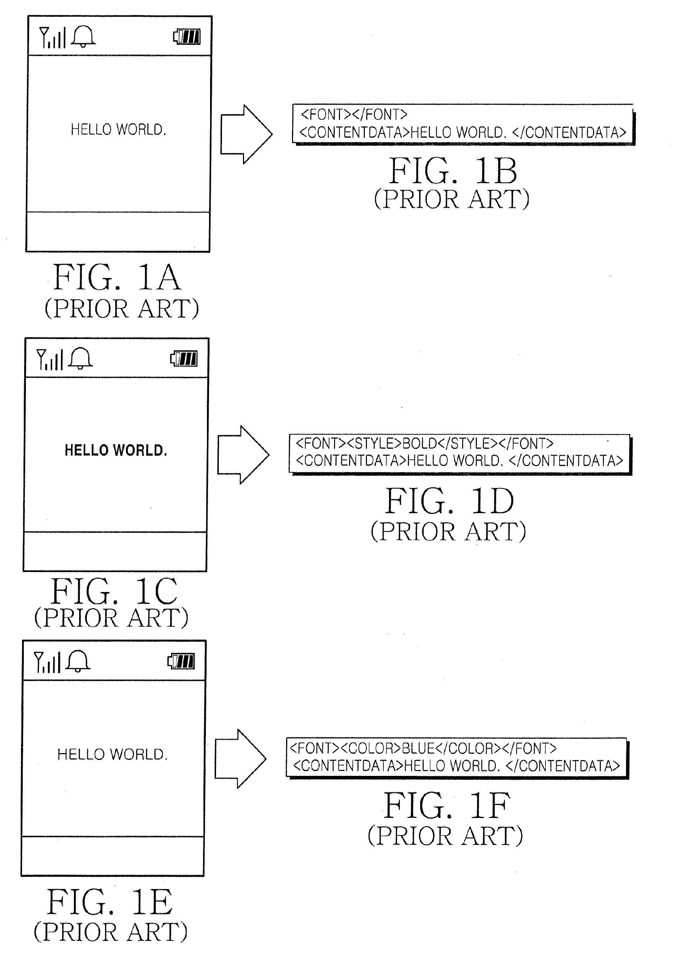

FIGs. 1A to 1F illustrate output screens for instant messages in a mobile terminal and results of converting the screens into eXtensible Markup Language (XML) documents according to the conventional art.

FIGs. 1A, 1C, and 1E illustrate output screens for displaying the instant messages in the mobile terminal. FIG. 1A illustrates the output screen with a font undefined. FIG. 1C illustrates the output screen when a font style is bold. FIG. 1E illustrates the output screen when a font is displayed in a color such as blue. FIGS. 1B, 1D, and 1F illustrate the results of converting the screens of FIGs. 1A, 1C, and 1E into XML documents. Referring to FIGs. 1B, 1D, and 1F, the conventional XML document defines a font once before defining content data representing character string data in the instant message. Thus, the instant message according to the conventional art has only one font per message.

Open Mobile Alliance Instant Messaging and Presence Service (OMA IMPS) V1.3 document, a standard for defining the instant message of the mobile terminal, will be described below for its font setup related portion.

<!ELEMENT Messagelnfo (MessagelD?, MessageURl?, ContentType?, ContentEncoding?, ContentSize, ContentName?, Recipient, Sender, DateTime?, Font?, Validity?, ExtBlockETEM*)>
...
<!ELEMENT ContentData (#PCDATA)>
...
<!ELEMENT Font (Size?, Style*, Color?)>

The OMA IMPS V1.3 standard will be described below. "Font?" can have maximum one font or nothing. "ContentData" can be a general character string (character data) or a general file (binary data). "Font" has information on a size, a style, and a color when "ContentData" is the general character string.

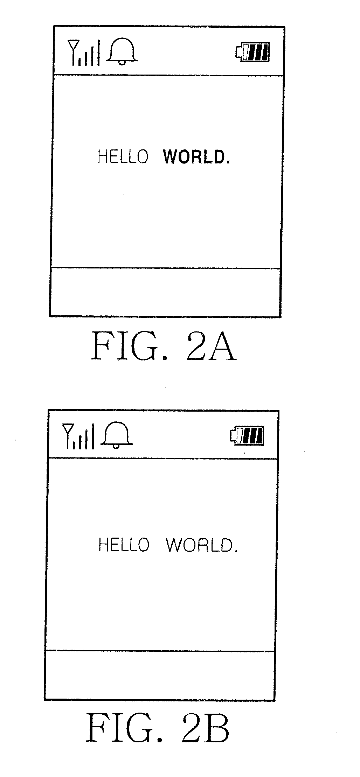

FIGs. 2A and 2B illustrate output screens for one instant message set with one or more fonts. FIG. 2A illustrates the output screen when part of the instant message, "world", has a boldstyle. FIG. 2B illustrates the output screen when a part of the instant message, "Hello", is one color, such as a red and an other part of the instant message, "world", is another color, such as green.

The conventional OMA IMPS V1.3 standard could not set a plurality of fonts to one instant message in the mobile terminal as shown in FIGs. 2A and 2B. Accordingly, an apparatus and method for setting a plurality of fonts to one instant message as in FIGs. 2A and 2B to satisfy user's diverse demands are being required.

The present invention has been designed to substantially solve at least the above problems and/or disadvantages and to provide at least the advantages below. Accordingly, the object of the present invention is to provide an apparatus and method for creating an instant message with a plurality of fonts in a mobile terminal.

This object is solved by the subject matter of the independent claims.

Preferred embodiments are defined in the dependent claims.

An aspect of the present invention is to provide an apparatus and method for outputting and displaying an instant message with a plurality of fonts in a mobile terminal.

A further aspect of the present invention is to provide a standard for displaying an instant message with a plurality of fonts in a mobile terminal.

The above aspects are achieved by providing an apparatus and method for displaying an instant message in a mobile terminal.

According to one aspect of the present invention, there is provided an apparatus for displaying an instant message in a mobile terminal. The apparatus includes an input unit for receiving a character string composing the instant message; a converter for converting the instant message into extensible Markup Language (XML); a message processor for, upon receipt of a character string set with one or more fonts from the input unit, controlling and creating the instant message composed of the character string, converting the instant message with one or more fonts into XML by the converter, and sending the XML-converted instant message; and a communication unit for sending and receiving the XML-converted instant message.

According to another aspect of the present invention, there is provided a method for creating and sending an instant message in a mobile terminal. The method includes creating the instant message having one or more fonts and composed of a character string; converting the created instant message into extensible Markup Language (XML); and sending the XML-converted instant message to a reception side.

According to a further aspect of the present invention, there is provided a method for creating and sending an instant message in a mobile terminal. The method includes creating the instant message having one or more fonts and composed of a character string; converting the created instant message into extensible Markup Language (XML); and sending the XML-converted instant message to a reception side.

The above and other aspects, features and advantages of the present invention will become more apparent from the following detailed description when taken in conjunction with the accompanying drawings in which:
FIGs. 1A, 1C and 1E illustrate output screens for instant messages in a mobile terminal, and FIGs. 1B, 1D and 1F illustrate results of converting the screens into XML documents according to a the prior art;
FIGs. 2A and 2B illustrate output screens for one instant message set with one or more fonts;
FIG. 3 illustrates the architecture of a mobile terminal for displaying an instant message with a plurality of fonts according to an exemplary embodiment of the present invention;
FIG. 4 is a flowchart illustrating a procedure of creating and sending an instant message having a plurality of fonts in a mobile terminal displaying the instant message according to an exemplary embodiment of the present invention;
FIG. 5 is a flowchart illustrating a procedure of receiving and outputting an instant message having a plurality of fonts in a mobile terminal displaying the instant message according to an exemplary embodiment of the present invention; and
FIGs. 6A, 6C and 6E illustrate output screens for instant messages with a plurality of fonts in a mobile terminal, and FIGs. 6B, 6D and 6F illustrate results of converting the screens into XML documents according to an exemplary embodiment of the present invention.

Preferred embodiments of the present invention will be described herein below with reference to the accompanying drawings. In the following description, well-known functions or constructions are not described in detail since they would obscure the invention in unnecessary detail.

The present invention provides an apparatus and method for setting a plurality of fonts to an instant message and displaying the instant message in a mobile terminal.

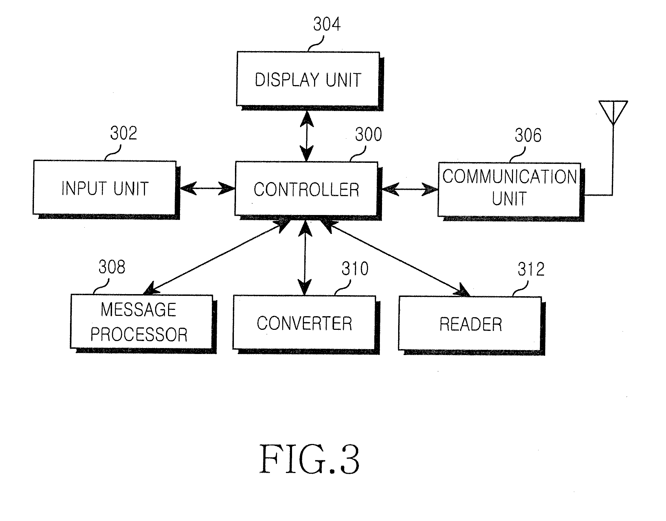

FIG. 3 illustrates the architecture of a mobile terminal for displaying an instant message with a plurality of fonts according to an exemplary embodiment of the present invention. Referring to FIG. 3, the mobile terminal includes a controller 300, an input unit 302, a display unit 304, a communication unit 306, a message processor 308, a converter 310, and a reader 312.

The input unit 302 can include a plurality of keys or a touch screen. The input unit 302 receives a character string included in an instant message from a user, and provides the received character string to the controller 300.

The display unit 304 displays an instant message capable of including a plurality of fonts under the control of the controller 300.

The communication unit 306 down-converts a frequency of a Radio Frequency (RF) signal received via an antenna (not shown), and processes the received signal by despreading and channel-decoding, at the time of reception. The communication unit 306 processes data by channel-coding and spreading, up-converts a frequency of the data, and transmits the data via the antenna (not shown), at the time of transmission. In addition to a general function, the communication unit 306 transmits/receives an instant message capable of including a plurality of fonts under the control of the controller 300 according to the present invention.

The message processor 308 controls and receives a character string from the input unit 302 for instant message transmission, creates an instant message set with one or more fonts by the received character string, converts the instant message with one or more fonts into an eXtensible Markup Language (XML) document by the converter 310, and sends the converted instant message by the communication unit 306. Upon receiving an instant message expressed in XML via the communication unit 306, the message processor 308 controls and reads the received XML instant message by the reader 312, and outputs a character string by a size, a style, and a color corresponding to a font included in the XML instant message, to the display unit 304.

The converter 310 converts an instant message created under the control of the message processor 308, into an XML document.

The reader 312 receives an instant message expressed in XML via the communication unit 306, and reads the received instant message under the control of the message processor 308.

The controller 300 controls the message processor 308, the converter 310, and the reader 312. In other words, the controller 200 can perform functions of the message processor 308, the converter 310, and the reader 312. In the present invention, they are separately constructed and illustrated so as to distinguish and describe the respective functions. Accordingly, in case where a product is actually realized, can be constructed to be part of all the functions can be constructed part of the controller 300. Alternately, it can be constructed to process only part of the functions by the controller 300.

If an XML document converted by the converter 310 and an XML document read by the reader 312 are based on the conventional OMA IMPS V1.3 standard, a plurality of fonts cannot be set to one instant message. Accordingly, there is a need to modify the conventional OMA IMPS V1.3 standard in its font setup related portion as follows.

<!ELEMENT MessageInfo (MessageID?, MessageURI?, ContentType?, ContentEncoding?, ContentSixe, ContentName?, Recipient, Sender, DateTime?, Validity?, ExtBlockETEM*)>
...
<!ELEMENT ContentData (Font*)>
...
<!ELEMENT Font (Size?, Style*, Color?, #PCDATA)>

Here, "MessagelD" included in message information (Messagelnfo) represents an IDentifier (ID) for identifying instant messages sent and received. "MessageURl" represents content accessible at a reception side. "ContentType" represents a data type of a received content. "ContentEncoding" represents a content encoding method. "CountSize" represents a size of content. "ContentName" is a name of a received content when the received content is a multimedia. "Recipient" represents a recipient. "Sender" represents a sender. "DateTime" represents date and time. "Font" represents a font that is set when "ContentType" is a text/plain. "Validity" represents a validity period. "ExtBlockETEM" can fill a block extensible for "Messagelnfo".

In other words, font is not included in "Messagelnfo" but is included within "ContentData". Font is defined as "Font*" to have a plurality of fonts. Each font has a character string (#PCDATA) input by a user.

A method for, upon transmission and reception, displaying an instant message in the mobile terminal according to the present invention will be described with reference to the drawings below.

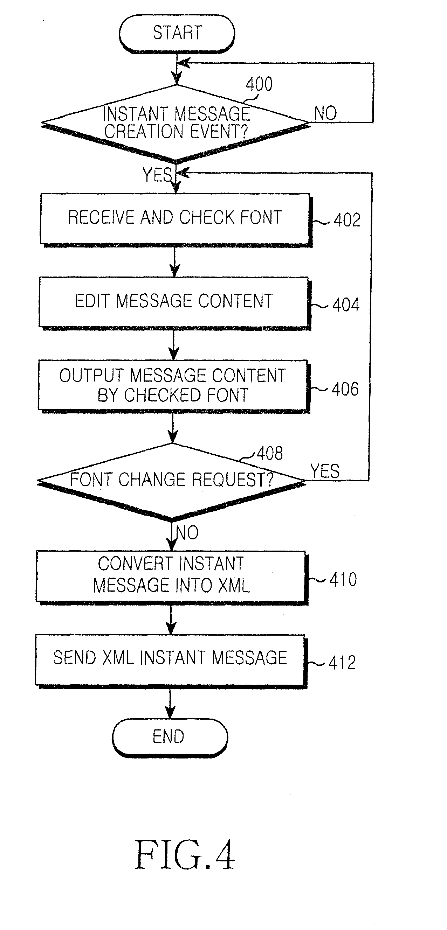

FIG. 4 is a flowchart illustrating a procedure of creating and transmitting an instant message having a plurality of fonts in the mobile terminal displaying the instant message according to an exemplary embodiment of the present invention. Referring to FIG. 4, the message processor 308 of the mobile terminal checks whether there occurs an instant message creation event in Step 400. If so, in Step 402, the message processor 308 receives a font, and checks a size, a style, and a color of the received font to be set. In Step 404, the message processor 308 receives a character string, which is a message content, through the input unit 302. In Step 406, the message processor 308 outputs the character string by a size, a style, and a color corresponding to the checked font, to the display unit 304. In Step 408, the message processor 308 checks whether there is a font change request of checking whether there exists a character string to be set with a new font. When there is a font change request in Step 408, the message processor 308 returns to Step 402, and receives a new font.

On the contrary, when a character string ends without font change request in Step 408, the message processor 308 converts an instant message including the input character string into an XML document by the converter 310 in Step 410. The message processor 308 proceeds to Step 412, and sends the converted instant message to a reception side, which is in an instant message service, through the communication unit 306.

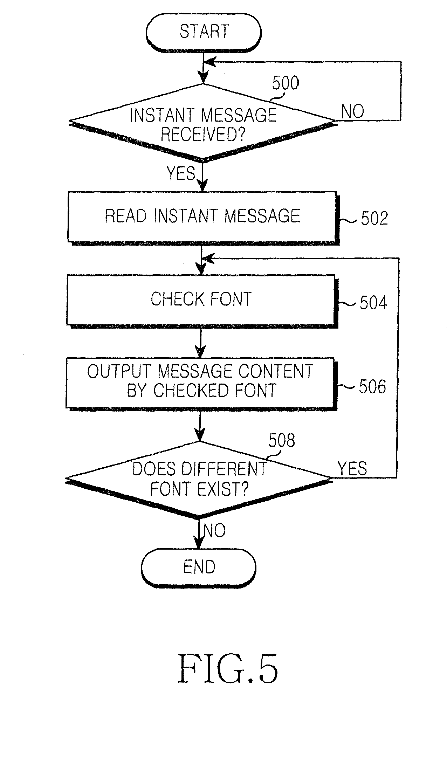

FIG. 5 is a flowchart illustrating a procedure of receiving and outputting an instant message having a plurality of fonts in the mobile terminal displaying the instant message according to an exemplary embodiment of the present invention. Referring to FIG. 5, the message processor 308 of the mobile terminal receives an instant message expressed with XML in Step 500. The message processor 308 reads the received XML instant message by the reader 312 in Step 502, and checks character size, style, and color defined by the font of the received XML instant message in Step 504. In Step 506, the message processor 308 outputs a character string included in the font by a size, a style, and a color corresponding to the font, to the display unit 304. In Step 508, the message processor 308 checks whether there is a new different font. When there is a new different font in Step 508, the message processor 308 repeatedly performs Steps 504 to 508 until there is not a new different font.

After that, the message processor 308 ends the process when there is not a new different font.

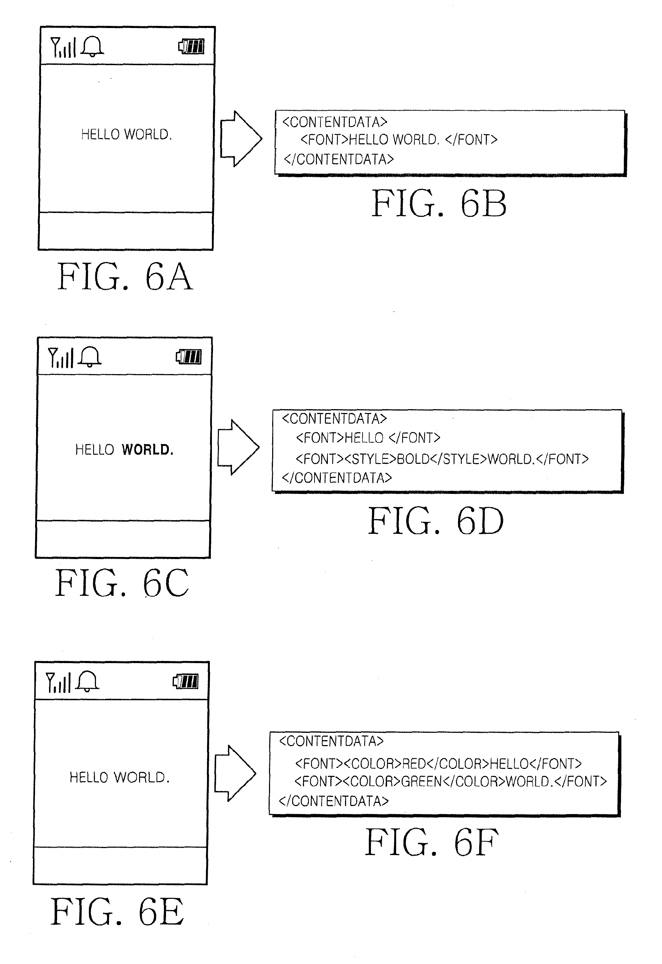

FIGs. 6A-6F illustrate output screens for instant messages with a plurality of fonts in the mobile terminal, and results of converting the screens into XML documents according to an exemplary embodiment of the present invention.

FIGS. 6A, 6C, and 6E illustrate the output screens for the instant messages in the mobile terminal according to the present invention. FIG. 6A illustrates the output screen with a font undefined. FIG. 6C illustrates the output screen when part of a character string, "world", is bold in font style. FIG. 6E illustrates the output screen when part of the character string, "Hello", is displayed in one font color such as red, and part of the character string, "world", is displayed in another font color, such as green. FIGs. 6B, 6D, and 6F illustrate results of converting the output screens of FIGs. 6A, 6C, and 6E into XML documents in compliance with respective standards defined by the present invention. Referring to FIGs. 6B, 6D, and 6F, the XML documents have one or more fonts within content data. Each font can have size, style, and color values, and has a character string input by a user. Thus, as shown in FIGs. 6A to 6F, the instant message including the plurality of fonts can be realized.

As described above, the present invention provides an apparatus and method for setting one or more fonts to an instant message and displaying the instant message in the mobile terminal in compliance with the modification of the OMA IMPS V1.3 standard. The present invention has an effect of providing various output screens.

While the invention has been shown and described with reference to certain preferred embodiments thereof, it will be understood by those skilled in the art that various changes in form and details may be made therein without departing from the scope of the invention as defined by the appended claims.

## Claims

1. An apparatus for displaying an instant message in a mobile terminal, the apparatus comprising:
an input unit for receiving a first character string composing a first instant message, the character string set with at least one first font;
a converter for converting the first instant message into eXtensible Markup Language, XML;
a message processor for, upon receipt of the first character string, controlling and creating the first instant message, converting the first instant message with the at least one first font into XML by the converter, and outputting the XML-converted first instant message; and
a communication unit for transmitting and receiving XML-converted instant message.

2. The apparatus of claim 1, further comprising a reader for reading XML-converted instant message,
wherein upon receipt of an XML-converted second instant message including at least one second font via the communication unit, the message processor controls and reads the second instant message expressed in XML by the reader, and outputs a second character string composing the second instant message, the second character string set with the at least one second font.

3. The apparatus of claim 2, wherein the at least one second font comprises information on at least one of a character size, a style, and a color.

4. The apparatus of one of claims 1 to 3, wherein the at least one first font comprises information on at least one of a character size, a style, and a color.

5. The apparatus of claim 1, wherein the converter is adapted to use <!ELEMENT Messagelnfo (MessagelD?, MessageURl?, ContentType?, ContentEncoding?, ContentSize, ContentName?, Recipient, Sender, DateTime?, Validity?, ExtBlockETEM*)>, which is a modification of the part of Open Mobile Alliance Instant Messaging and Presence Service, OMA IMPS, V1.3 standard as <!ELEMENT MessageInfo (MessagelD?, MessageURl?, ContentType?, ContentEncoding?, ContentSize, ContentName?, Recipient, Sender, DateTime?, Font?, Validity?, ExtBlockETEM*)>from the Open Mobile Alliance Instant Messaging and Presence Service, OMA IMPS, V1.3 standard.

6. The apparatus of claim 1, wherein the converter is adapted to use <!ELEMENT ContentData (Font*)>, which is a modification of the part of OMA IMPS V1.3 standard as <!ELEMENT ContentData (#PCDATA)> from the OMA IMPS V1.3 standard.

7. The apparatus of claim 1, wherein the converter is adapted to use <!ELEMENT Font (Size?, Style*, Color?, #PCDATA)>, which is a modification of the part of OMA IMPS V1.3 standard as <!ELEMENT Font (Size?, Style*, Color?)>.

8. A method for creating and transmitting an instant message in a mobile terminal, the method comprising:
creating an instant message having at least one font and comprising a character string;
converting the created instant message into eXtensible Markup Language, XML; and
transmitting the XML-converted instant message to a reception side.

9. The method of claim 8, wherein the at least one font comprises information on at least one of a character size, a style, and a color to be applied to the character string.

10. The method of claim 8, wherein converting the created instant message into XML uses <!ELEMENT MessageInfo (MessageID?, MessageURI?, ContentType?, ContentEncoding?, ContentSize, ContentName?, Recipient, Sender, DateTime?, Validity?, ExtBlockETEM*)>, which is a modification of the part of Open Mobile Alliance Instant Messaging and Presence Service, OMA IMPS, V1.3 standard as <!ELEMENT MessageInfo (MessageID?, MessageURI?, ContentType?, ContentEncoding?, ContentSize, ContentName?, Recipient, Sender, DateTime?, Font?, Validity?, ExtBlockETEM*)>.

11. The method of claim 8, wherein converting the created instant message into XML uses <!ELEMENT ContentData (Font*)>, which is a modification of the part of OMA IMPS V1.3 standard as <!ELEMENT ContentData (#PCDATA )>.

12. The method of claim 8, wherein the converting of the created instant message into XML uses <!ELEMENT Font (Size?, Style*, Color?, #PCDATA)>, which is a modification of the part of OMA IMPS V1.3 standard as <!ELEMENT Font (Size?, Style*, Color?)>.

13. A method for receiving and outputting an instant message in a mobile terminal, the method comprising:
upon receipt of an instant message obtained by converting a message into extensible Markup Language, XML, reading the instant message expressed in XML; and
outputting as a read result a character string included in the instant message, the read result set with at least one font included in the instant message.

14. The method of claim 13, wherein the at least one font comprises information on at least one of a character size, a style, and a color.

15. The method of claim 13, wherein reading the instant message expressed in XML uses <!ELEMENT Messagelnfo (MessagelD?, MessageURl?, ContentType?, ContentEncoding?, ContentSize, ContentName?, Recipient, Sender, DateTime?, Validity?, ExtBlockETEM*)>, which is a modification of the part of OMA IMPS V1.3 standard as <!ELEMENT Messagelnfo (MessagelD?, MessageURl?, ContentType?, ContentEncoding?, ContentSize, ContentName?, Recipient, Sender, DateTime?, Font?, Validity?, ExtBIockETEM*)>.

16. The method of claim 13, wherein the reading of the instant message expressed with XML uses <!ELEMENT ContentData (Font*)>, which is a modification of the part of OMA IMPS V1.3 standard as <!ELEMENT ContentData (#PCDATA)>.

17. The method of claim 13, wherein the reading of the instant message expressed with XML uses <!ELEMENT Font (Size?, style*, Color?, #PCDATA)>, which is a modification of the part of OMA IMPS V1.3 standard as <!ELEMENT Font (Size?, Style*, Color?)>.

18. An apparatus for displaying an instant message in a mobile terminal, the apparatus comprising:
means for creating an instant message having at least one font and comprising a character string;
means for converting the created instant message into extensible Markup Language, XML; and
means for transmitting the XML-converted instant message to a reception side.

19. The apparatus of claim 18, further comprising means for displaying XML-converted instant message.
